# EUROPEAN PATENT APPLICATION

(11) **EP 4 699 859 A1**
(43) Date of publication of application: **25.02.2026**
(21) Application number: 25196384.9
(22) Date of filing: 18.08.2025
(51) Int. Cl.: B60N 2/23, B60N 2/02, B60N 2/16, B60N 2/18, F16H 25/24

(54) **APPARATUS FOR MOVING SEAT RAIL FOR VEHICLE**

(30) Priority: 22.08.2024 KR 20240112968
(71) Applicant: Hyundai Transys Inc., Chungcheongnam-do 31930 (KR)
(72) Inventor: LEE, Young Sun, 18463 Hwaseong-si, Gyeonggi-do (KR)
(74) Representative: Viering, Jentschura & Partner mbB Patent- und Rechtsanwälte

(57) **Abstract**

An apparatus for moving a seat rail for a vehicle includes a casing, a lead nut mounted in the casing and screw-coupled to a lead screw configured to penetrate the casing, a worm wheel having first engagement portions provided on one surface of the worm wheel, and a clutch drum configured such that second engagement portions configured to engage with the first engagement portions are provided on one surface of the clutch drum, and keys provided on an inner-diameter portion of the clutch drum are inserted into key grooves provided in the outer-diameter portion of the lead nut.

## Description

### CROSS-REFERENCE TO RELATED APPLICATIONS

This application claims priority to and the benefit of Korean Patent Application No. 10-2024-0112968 filed in the Korean Intellectual Property Office on August 22, 2024, the entire contents of which are incorporated herein by reference.

### TECHNICAL FIELD

The present disclosure relates to an apparatus for moving a seat rail for a vehicle.

### BACKGROUND ART

In general, seats may be mounted in a vehicle. The vehicle seat may include a seatback configured to support a passenger's upper body, a seat cushion configured to support the passenger's lower body, and a headrest configured to support the passenger's head.

Seat rails, which are applied to second-row or third-row seats in sport utility vehicles (SUVs) or multi-purpose vehicles (MPVs), are applied as long rails longer in length than seat rails mounted in general passenger vehicles.

The vehicle seats may be classified into power seats and manual seats. The power seat may be moved to a desired position by an operation of a motor performed only by an operation of a switch. The manual seat may be moved by a manual operation.

A seat rail for a vehicle in the related art may include a lower rail and an upper rail. The lower rail is fixed to a floor panel. The upper rail is coupled to the lower rail, configured to be movable forward or rearward along the lower rail, and connected to the vehicle seat. In the case of the power seat configured such that the upper rail is moved by the motor, a plurality of gears (pinion gears, rack gears, etc.) configured to move the upper rail may be mounted in the lower rail.

However, the power-driven seat rail for a vehicle in the related art is not equipped with a separate control device, which makes it difficult to quickly move or stop the vehicle seat.

### [Document of Related Art]

### [Patent Document]

(Patent Document 1) Korean Patent Application Laid-Open No. 10-2023-0161765 (published on November 28, 2023)

### SUMMARY OF THE DISCLOSURE

The present disclosure has been made in an effort to solve the above-mentioned problem, and an object of the present disclosure is to provide an apparatus for moving a seat rail for a vehicle, the apparatus being configured to allow the seat rail to move along a lead screw by an engagement operation of a clutch drum or prevent the seat rail from moving along the lead screw by a disengagement operation of the clutch drum.

In order to achieve the above-mentioned object, the present disclosure provides an apparatus for moving a seat rail for a vehicle. The apparatus may include: a casing; a lead nut mounted in the casing and configured to be screw-coupled to a lead screw penetrating the casing, the lead nut being configured to move along the lead screw; a worm wheel rotatably coupled to an outer-diameter portion of the lead nut to rotate independently of the lead nut about an axis of the lead nut and having first engagement portions disposed on one surface of the worm wheel; and a clutch drum coupled to the outer-diameter portion of the lead nut and disposed opposite to the worm wheel, the clutch drum having second engagement portions configured to engage with the first engagement portions, the second engagement portions being disposed on one surface of the clutch drum, the clutch drum and the lead nut being configured to rotate together.

In addition, the first engagement portions of the worm wheel and the second engagement portions of the clutch drum may be configured to be disengaged when the clutch drum moves in a direction opposite to the first engagement portions, and the second engagement portions of the clutch drum may be configured to engage with the first engagement portions of the worm wheel when the clutch drum moves in a direction toward the first engagement portions.

In addition, the apparatus may further include: a shift ring configured to allow the second engagement portions to engage with the first engagement portions by pushing the clutch drum in a direction toward the first engagement portions.

In addition, the shift ring may include: a main body having a ring shape, including an inner ring portion and an outer ring portion, the inner ring portion being inserted and coupled into a coupling groove disposed on an outer-diameter portion of the clutch drum; and a cut-out portion defined between one end and another end of the main body.

In addition, the apparatus may further include: a lever, wherein one end of a lever may be inserted into the cut-out portion, and a coupling pin may be coupled to penetrate the one end of the main body, the one end of the lever, and the another end of the main body.

In addition, the clutch drum may be elastically supported by an elastic member.

In addition, one end of the elastic member may be tightly attached to the clutch drum, and another end of the elastic member may be inserted into an accommodation portion disposed in the casing.

In addition, the elastic member may be configured to be compressed while being pushed in a direction toward the accommodation portion by the clutch drum.

In addition, the worm wheel may be connected to a power source by a power transmission member.

In addition, the power transmission member may include a belt, and a gear portion disposed on an inner-diameter portion of the power transmission member may be configured to engage with a gear portion disposed on an outer-diameter portion of the worm wheel.

In addition, the clutch drum may include keys disposed on an inner-diameter portion of the clutch drum, the lead nut may include key grooves disposed on the outer-diameter portion of the lead nut, and the keys may be inserted into the key grooves, the keys being slidable along the key grooves.

In addition, the key grooves may be defined on the outer-diameter portion of the lead nut along an axial direction of the lead nut, such that the keys are slidable along the key grooves in the axial direction.

In addition, the apparatus may further include: a bearing disposed on the outer-diameter portion of the lead nut and facing another surface of the worm wheel opposite to the one surface of the worm wheel, the bearing being configured to restrict movement of the worm wheel along the lead nut.

In addition, the one surface of the clutch drum and the one surface of the worm wheel may face each other.

In addition, the clutch drum may be configured to rotate independently of the shift ring while being coupled to the inner ring portion of the shift ring.

In addition, the worm wheel, the clutch drum, and the shift ring may be disposed in the casing.

In addition, the casing may be configured to be connected to a vehicle seat, such that the vehicle seat moves when the casing moves along the lead screw. In addition, the inner ring portion may extend from the one end of the main body to the another end of the main body on an inner diameter surface of the main body.

In addition, at least one portion of the lever may extend in a direction parallel to an axial direction of the lead nut, such that an end of the at least one portion of the lever is disposed outside of the casing.

In addition, the accommodation portion may include a groove defined opposite to the one end of the elastic member in a direction parallel to an axial direction of the lead nut.

According to the present disclosure, it is possible to allow the seat rail to move along the lead screw by the engagement operation of the clutch drum or prevent the seat rail from moving along the lead screw by the disengagement operation of the clutch drum.

The foregoing summary is illustrative only and is not intended to be in any way limiting. In addition to the illustrative aspects, embodiments, and features described above, further aspects, embodiments, and features will become apparent by reference to the drawings and the following detailed description.

### BRIEF DESCRIPTION OF THE DRAWINGS

FIG. 1 is a perspective view illustrating a state in which an apparatus for moving a seat rail for a vehicle according to an exemplary embodiment of the present disclosure is coupled to a lead screw.
FIG. 2 is a side view illustrating a state in which the apparatus for moving a seat rail for a vehicle according to the exemplary embodiment of the present disclosure is coupled to the lead screw.
FIG. 3 is a perspective view of the apparatus for moving a seat rail for a vehicle according to the exemplary embodiment of the present disclosure.
FIG. 4 is a view illustrating a state in which a worm wheel is coupled to a lead nut according to the exemplary embodiment of the present disclosure.
FIG. 5 is a view illustrating a clutch drum according to the exemplary embodiment of the present disclosure.
FIG. 6 is a view illustrating a shift ring and a lever according to the exemplary embodiment of the present disclosure.
FIG. 7 is a view illustrating a disengaged state between first engagement portions of the worm wheel and second engagement portions of the clutch drum according to the exemplary embodiment of the present disclosure.
FIG. 8 is a view illustrating an engaged state between the first engagement portions of the worm wheel and the second engagement portions of the clutch drum according to the exemplary embodiment of the present disclosure.

It should be understood that the appended drawings are not necessarily to scale, presenting a somewhat simplified representation of various features illustrative of the basic principles of the disclosure. The specific design features of the present disclosure as disclosed herein, including, for example, specific dimensions, orientations, locations, and shapes will be determined in part by the particular intended application and use environment.

In the figures, reference numbers refer to the same or equivalent parts of the present disclosure throughout the several figures of the drawing.

### DETAILED DESCRIPTION

Hereinafter, exemplary embodiments of the present disclosure will be described in detail with reference to the accompanying drawings. First, in assigning reference numerals to constituent elements of the respective drawings, it should be noted that the same constituent elements will be designated by the same reference numerals, if possible, even though the constituent elements are illustrated in different drawings. In addition, in the description of the present disclosure, the specific descriptions of publicly known related configurations or functions will be omitted when it is determined that the specific descriptions may obscure the subject matter of the present disclosure. Further, the exemplary embodiments of the present disclosure will be described below, but the technical spirit of the present disclosure is not limited thereto and may, of course, be modified and variously carried out by those skilled in the art.

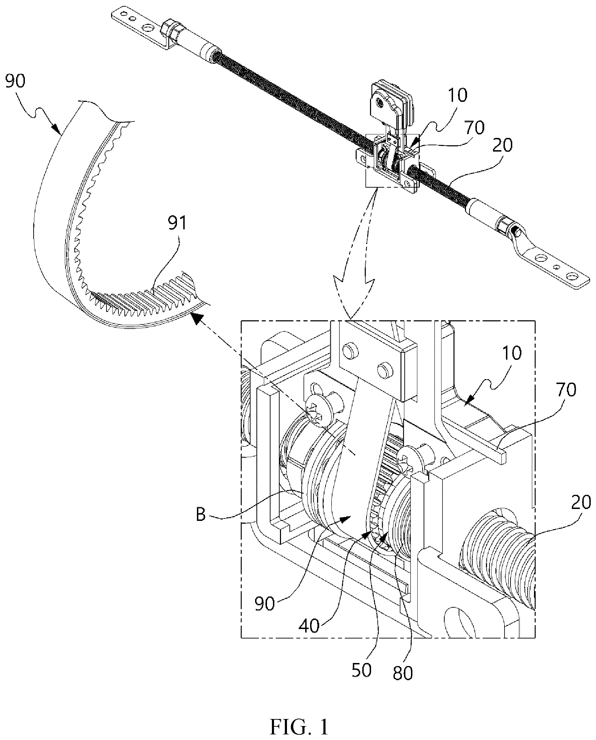

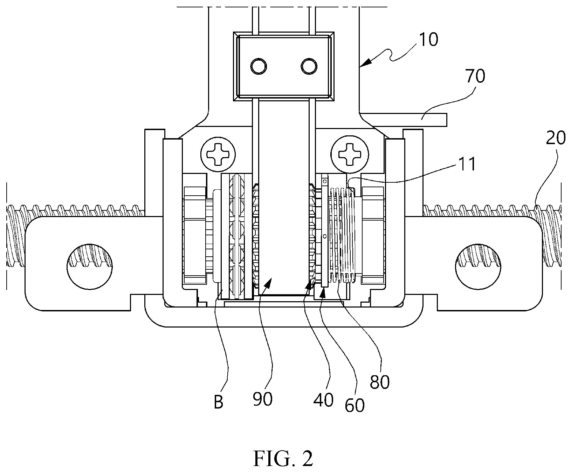

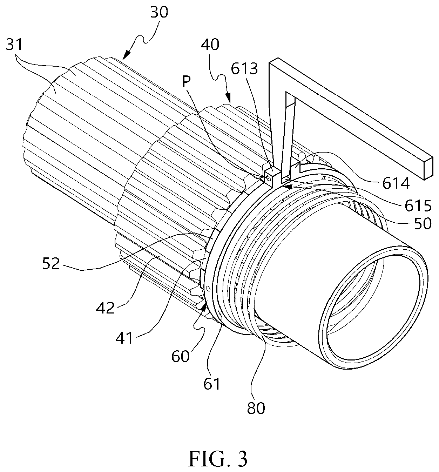

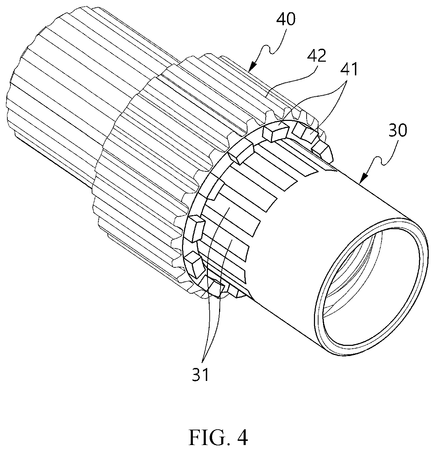

FIG. 1 is a perspective view illustrating a state in which an apparatus for moving a seat rail for a vehicle according to an exemplary embodiment of the present disclosure is coupled to a lead screw. FIG. 2 is a side view illustrating a state in which the apparatus for moving a seat rail for a vehicle according to the exemplary embodiment of the present disclosure is coupled to the lead screw. FIG. 3 is a perspective view of the apparatus for moving a seat rail for a vehicle according to the exemplary embodiment of the present disclosure. FIG. 4 is a view illustrating a state in which a worm wheel is coupled to a lead nut according to the exemplary embodiment of the present disclosure.

As illustrated in FIGS. 1 to 4, the apparatus for moving a seat rail for a vehicle of the present disclosure may include a casing 10 mounted on a lead screw 20, a lead nut 30 disposed in the casing 10 and coupled to the lead screw 20, a worm wheel 40 disposed in the casing 10 and coupled to the lead nut 30, a clutch drum 50 disposed in the casing 10, coupled to the lead nut 30, and configured to perform an engagement or disengagement, and a shift ring 60 configured to move the clutch drum 50 in an engagement direction.

The casing 10 may be mounted on the lead screw 20. The lead screw 20 may be assembled to penetrate the casing 10. The casing 10 may move along the lead screw 20. The lead screw 20, the worm wheel 40, the clutch drum 50, and the shift ring 60 may be mounted in the casing 10.

The lead screw 20 may be inserted and coupled into a lower rail (not illustrated). The lower rail (not illustrated) may be coupled to a floor panel (not illustrated) in the vehicle. The casing 10 may be connected to an upper rail (not illustrated). The upper rail (not illustrated) may be connected to a vehicle seat (not illustrated). When the casing 10 moves, the vehicle seat (not illustrated) connected to the upper rail (not illustrated) may be moved.

The lead nut 30 may be screw-coupled to the lead screw 20. The lead nut 30 may move along the lead screw 20. Key grooves 31 may be provided in an outer-diameter portion of the lead nut 30.

The lead nut 30 may be rotatably supported by a support member B such as a bearing coupled in the casing 10.

The worm wheel 40 may be rotatably coupled to the outer-diameter portion of the lead nut 30. The worm wheel 40 may include first engagement portions 41 and a gear portion 42. The first engagement portions 41 may be provided on one surface of the worm wheel 40 directed toward the clutch drum 50.

The gear portion 42 of the worm wheel 40 may be provided on an outer-diameter portion of the worm wheel 40. The worm wheel 40 may be connected to a power source (not illustrated) by a power transmission member 90 such as a belt. A gear portion 91 may be provided on an inner-diameter portion of the power transmission member 90. The gear portion 91 of the power transmission member 90 may engage with the gear portion 42 of the worm wheel 40. The power source (not illustrated) may be a motor.

Power from the power source (not illustrated) may be transmitted to the worm wheel 40 via the power transmission member 90. In the casing 10, a movement of the worm wheel 40 may be restricted by the support member B, such as a bearing, coupled to the casing 10.

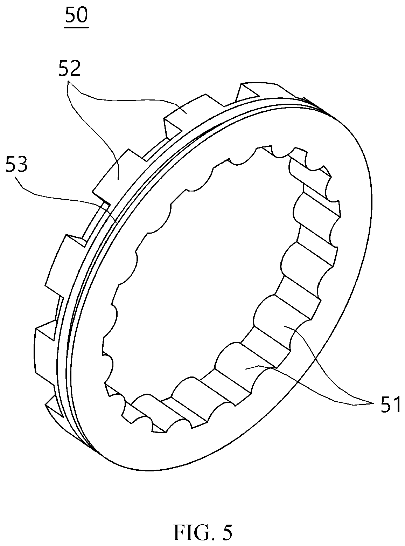

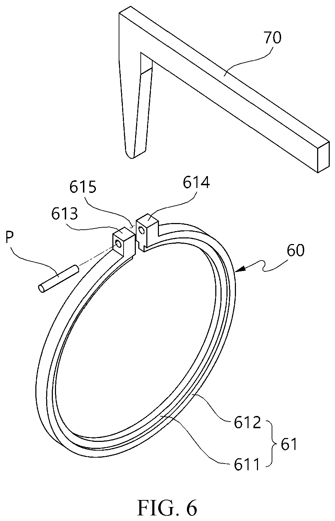

FIG. 5 is a view illustrating the clutch drum according to the exemplary embodiment of the present disclosure, and FIG. 6 is a view illustrating the shift ring 60 and a lever 70 according to the exemplary embodiment of the present disclosure.

As illustrated in FIGS. 2, 3, and 5, the clutch drum 50 may be coupled to the outer-diameter portion of the lead nut 30 and disposed opposite to the worm wheel 40. The clutch drum 50 may include second engagement portions 52 and keys 51.

The second engagement portions 52 may be provided on one surface of the clutch drum 50. The second engagement portions 52 may engage with the first engagement portions 41 of the worm wheel 40.

The first engagement portions 41 of the worm wheel 40 and the second engagement portions 52 of the clutch drum 50 may constitute a dog clutch engagement structure.

The keys 51 may be formed on an inner-diameter portion of the clutch drum 50. The keys 51 may be inserted into the key grooves 31 of the lead nut 30 and slide along the key grooves 31.

The clutch drum 50 may be elastically supported by an elastic member 80. The elastic member 80 may be a spring. The elastic member 80 may be coupled to the outer-diameter portion of the lead nut 30.

One end of the elastic member 80 may be tightly attached to the clutch drum 50. The other end of the elastic member 80 may be inserted into an accommodation portion 11 provided in the casing 10.

The elastic member 80 may be pushed by the clutch drum 50 and compressed in a direction toward the accommodation portion 11. When a force, which pushes the elastic member 80 by the clutch drum 50, is eliminated, the elastic member 80 may push the clutch drum 50 in the engagement direction while being stretched toward an original state.

As illustrated in FIGS. 2, 3, 5, and 6, the shift ring 60 may include a main body 61 having an inner ring portion 611 and an outer ring portion 612, and a cut-out portion 615 formed between one end 613 and the other end 614 of the main body 61.

The inner ring portion 611 may be coupled to a coupling groove 53 provided on an outer-diameter portion of the clutch drum 50. The clutch drum 50 may rotate in a state in which the clutch drum 50 is coupled to the inner ring portion 611 of the shift ring 60.

One end of the lever 70 may be inserted into the cut-out portion 615 of the main body 61. In the state in which one end of the lever 70 is inserted into the cut-out portion 615 of the main body 61, a coupling pin P may be coupled to penetrate one end 613 of the main body 61, one end of the lever 70, and the other end 614 of the main body 61. The other end of the lever 70 may be exposed to the outside of the casing 10.

The lever 70 may be manipulated by a power operating method or a manual operating method. According to the power operating method, the lever 70 may be pulled by various devices such as a motor or an actuator. According to the manual operating method, the lever 70 may be pulled by a manual operation.

During a process of assembling the shift ring 60 and the clutch drum 50, the inner ring portion 611 is inserted into the coupling groove 53 of the clutch drum 50 in a state in which one end 613 and the other end 614 of the main body 61 are spaced apart from each other, such that the shift ring 60 and the clutch drum 50 may be easily assembled.

When the first engagement portions 41 of the worm wheel 40 and the second engagement portions 52 of the clutch drum 50 are disengaged by a disengagement operation of the clutch drum 50, the worm wheel 40 idles or rotates without transmitting power to the clutch drum 50 in the state in which the worm wheel 40 is coupled to the outer-diameter portion of the lead nut 30 even though power from the power source (not illustrated) is transmitted to the worm wheel 40 via the power transmission member 90. Therefore, the lead nut 30 does not rotate. Therefore, the lead nut 30 cannot move along the lead screw 20.

On the contrary, when the first engagement portions 41 of the worm wheel 40 and the second engagement portions 52 of the clutch drum 50 are engaged by an engagement operation of the clutch drum 50, power from the power source (not illustrated) is transmitted to the worm wheel 40 via the power transmission member 90, such that the worm wheel 40 may rotate. The lead nut 30 may be rotated by the rotation of the worm wheel 40, such that the lead nut 30 may move in a forward/rearward direction along the lead screw 20.

Next, a disengagement process of the present disclosure will be described.

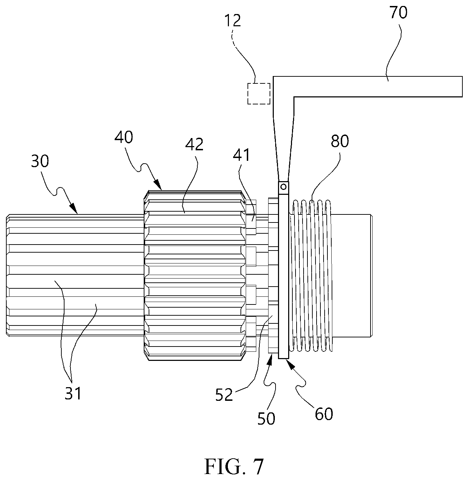

FIG. 7 is a view illustrating a disengaged state between the first engagement portions of the worm wheel and the second engagement portions of the clutch drum according to the exemplary embodiment of the present disclosure.

As illustrated in FIGS. 2 and 7, when the lever 70 is pulled, the clutch drum 50 moves in a disengagement direction because the lever 70 and the shift ring 60 are connected and the shift ring 60 is coupled to the clutch drum 50. Therefore, the first engagement portions 41 of the worm wheel 40 and the second engagement portions 52 of the clutch drum 50 may be disengaged.

In this case, the elastic member 80 is pushed by the clutch drum 50 that moves in the disengagement direction, such that the elastic member 80 may be compressed in the direction toward the accommodation portion 11 of the casing 10.

In the disengaged state between the first engagement portions 41 of the worm wheel 40 and the second engagement portions 52 of the clutch drum 50, power from the power source (not illustrated) is transmitted to the worm wheel 40 via the power transmission member 90, such that the worm wheel 40 may rotate.

Even though the worm wheel 40 rotates, the worm wheel 40 idles or rotates without transmitting power to the clutch drum 50 in the state in which the worm wheel 40 is coupled to the outer-diameter portion of the lead nut 30 because the first engagement portions 41 of the worm wheel 40 and the second engagement portions 52 of the clutch drum 50 are in the disengaged state. Therefore, the clutch drum 50 does not rotate.

Because a rotational force of the worm wheel 40 is not transmitted to the clutch drum 50, as described above, the clutch drum 50 cannot move along the lead screw 20.

Next, an engagement process of the present disclosure will be described.

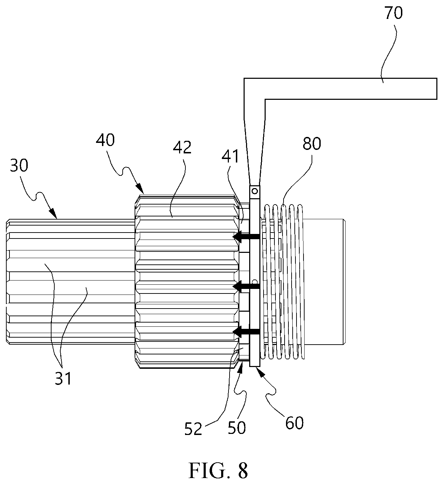

FIG. 8 is a view illustrating an engaged state between the first engagement portions of the worm wheel and the second engagement portions of the clutch drum according to the exemplary embodiment of the present disclosure.

As illustrated in FIGS. 2 and 8, when a force, which pulls the lever 70, is eliminated, the compressed elastic member 80 may push the clutch drum 50 in the engagement direction while being stretched to the original state.

As the clutch drum 50 is pushed in the engagement direction, the second engagement portions 52 of the clutch drum 50 may engage with the first engagement portions 41 of the worm wheel 40.

As described above, the second engagement portions 52 of the clutch drum 50 engage with the first engagement portions 41 of the worm wheel 40, and the keys 51 of the clutch drum 50 are coupled to the key grooves 31 of the lead nut 30 at all times, such that the lead nut 30, the worm wheel 40, and the clutch drum 50 may rotate integrally.

In the engaged state between the first engagement portions 41 of the worm wheel 40 and the second engagement portions 52 of the clutch drum 50, power from the power source (not illustrated) is transmitted to the worm wheel 40 via the power transmission member 90, such that the worm wheel 40 may rotate.

The second engagement portions 52 of the clutch drum 50 engage with the first engagement portions 41 of the worm wheel 40, and the keys 51 of the clutch drum 50 are coupled to the key grooves 31 of the lead nut 30 at all times, such that the rotational force of the worm wheel 40 may be transmitted to the lead nut 30 via the clutch drum 50, and the lead nut 30 may rotate.

As the lead nut 30 rotates, the lead nut 30 may move in the forward/rearward direction along the lead screw 20 screw-coupled to the lead nut 30. The lead nut 30 may move along the lead screw 20 together with the casing 10.

For example, when the lever 70 is axially rotated in a catching direction in a state in which the lever 70 is pulled in the disengagement direction in case that the method of operating the lever 70 is a manual operation method, the lever 70 is caught by a catching portion 12 provided on the casing 10, and the movement of the lever 70 in the engagement direction is restricted, such that the compressed state of the elastic member 80 may be maintained. When the lever 70 is axially rotated in a release direction, the lever 70 separates from the catching portion 12, such that the elastic member 80 may be stretched to the original state.

For example, in case that the method of operating the lever 70 is an automatic power operation method, the lever 70 may be connected to a pulling device (not illustrated) such as an actuator, and the lever 70 may be pulled in the disengagement direction by the pulling operation of the pulling device (not illustrated), such that the elastic member 80 may be compressed. When the pulling operation of the pulling device (not illustrated) is stopped, the elastic member 80 may be stretched to the original state.

According to the present disclosure described above, it is possible to allow the seat rail to move along the lead screw by the engagement operation of the clutch drum or prevent the seat rail from moving along the lead screw by the disengagement operation of the clutch drum.

The above description is simply given for illustratively describing the technical spirit of the present disclosure, and those skilled in the art to which the present disclosure pertains will appreciate that various modifications, changes, and substitutions are possible without departing from the essential characteristics of the present disclosure. Accordingly, the embodiments disclosed in the present disclosure and the accompanying drawings are intended not to limit but to describe the technical spirit of the present disclosure, and the scope of the technical spirit of the present disclosure is not limited by the embodiments and the accompanying drawings. The protective scope of the present disclosure should be construed based on the following claims, and all the technical spirit in the equivalent scope thereto should be construed as falling within the scope of the present disclosure.

As described above, the exemplary embodiments have been described and illustrated in the drawings and the specification. The exemplary embodiments were chosen and described in order to explain certain principles of the disclosure and their practical application, to thereby enable others skilled in the art to make and utilize various exemplary embodiments of the present disclosure, as well as various alternatives and modifications thereof. As is evident from the foregoing description, certain aspects of the present disclosure are not limited by the particular details of the examples illustrated herein, and it is therefore contemplated that other modifications and applications, or equivalents thereof, will occur to those skilled in the art. Many changes, modifications, variations and other uses and applications of the present construction will, however, become apparent to those skilled in the art after considering the specification and the accompanying drawings. All such changes, modifications, variations and other uses and applications which do not depart from the spirit and scope of the disclosure are deemed to be covered by the disclosure which is limited only by the claims which follow.

### [Description of Reference Numerals]

- 10:: Casing
- 11:: Accommodation portion
- 12:: Catching portion
- 20:: Lead screw
- 30:: Lead nut
- 31:: Key groove
- 40:: Worm wheel
- 41:: First engagement portion
- 42:: Gear portion
- 50:: Clutch drum
- 51:: Key
- 52:: Second engagement portion
- 53:: Coupling groove
- 60:: Shift ring
- 61:: Main body
- 611:: Inner ring portion
- 612:: Outer ring portion
- 613:: One end
- 614:: The other end
- 615:: Cut-out portion
- 70:: Lever
- 80:: Elastic member
- 90:: Power transmission member
- 91:: Gear portion
- B:: Support member
- P:: Coupling pin

## Claims

1. An apparatus for moving a seat rail for a vehicle, the apparatus comprising:
a casing;
a lead nut mounted in the casing and configured to be screw-coupled to a lead screw penetrating the casing, the lead nut being configured to move along the lead screw;
a worm wheel rotatably coupled to an outer-diameter portion of the lead nut to rotate independently of the lead nut about an axis of the lead nut and having first engagement portions disposed on one surface of the worm wheel; and
a clutch drum coupled to the outer-diameter portion of the lead nut and disposed opposite to the worm wheel, the clutch drum having second engagement portions configured to engage with the first engagement portions, the second engagement portions being disposed on one surface of the clutch drum, the clutch drum and the lead nut being configured to rotate together.

2. The apparatus of claim 1, wherein the first engagement portions of the worm wheel and the second engagement portions of the clutch drum are configured to be disengaged when the clutch drum moves in a direction opposite to the first engagement portions, and
wherein the second engagement portions of the clutch drum are configured to engage with the first engagement portions of the worm wheel when the clutch drum moves in a direction toward the first engagement portions.

3. The apparatus of claim 1 or 2, further comprising:
a shift ring configured to allow the second engagement portions to engage with the first engagement portions by pushing the clutch drum in a direction toward the first engagement portions,
wherein, optionally, the worm wheel, the clutch drum, and the shift ring are disposed in the casing.

4. The apparatus of claim 3, wherein the shift ring comprises:
a main body having a ring shape, including an inner ring portion and an outer ring portion, the inner ring portion being inserted and coupled into a coupling groove disposed on an outer-diameter portion of the clutch drum; and
a cut-out portion defined between one end and another end of the main body.

5. The apparatus of claim 4, further comprising:
a lever,
wherein one end of the lever is inserted into the cut-out portion, and a coupling pin is coupled to penetrate the one end of the main body, the one end of the lever, and the another end of the main body.

6. The apparatus of any one of claims 1 to 5, wherein the clutch drum is elastically supported by an elastic member,
wherein, optionally, one end of the elastic member is attached to the clutch drum, and another end of the elastic member is inserted into an accommodation portion disposed in the casing,
wherein, further optionally, the elastic member is configured to be compressed while being pushed in a direction toward the accommodation portion by the clutch drum.

7. The apparatus of any one of claims 1 to 6, wherein the worm wheel is connected to a power source by a power transmission member,
wherein, optionally, the power transmission member includes a belt, and a gear portion disposed on an inner-diameter portion of the power transmission member is configured to engage with a gear portion disposed on an outer-diameter portion of the worm wheel.

8. The apparatus of any one of claims 1 to 7,
wherein the clutch drum includes keys disposed on an inner-diameter portion of the clutch drum, and the lead nut includes key grooves disposed on the outer-diameter portion of the lead nut,
wherein the keys are inserted into the key grooves, the keys being slidable along the key grooves,
wherein, optionally, the key grooves are defined on the outer-diameter portion of the lead nut along an axial direction of the lead nut, such that the keys are slidable along the key grooves in the axial direction.

9. The apparatus of any one of claims 1 to 8, further comprising:
a bearing disposed on the outer-diameter portion of the lead nut and facing another surface of the worm wheel opposite to the one surface of the worm wheel, the bearing being configured to restrict movement of the worm wheel along the lead nut.

10. The apparatus of any one of claims 1 to 9,
wherein the one surface of the clutch drum and the one surface of the worm wheel face each other.

11. The apparatus of claim 4 or any one of claims 5 to 10 in combination with claim 4,
wherein the clutch drum is configured to rotate independently of the shift ring while being coupled to the inner ring portion of the shift ring.

12. The apparatus of any one of claims 1 to 11,
wherein the casing is configured to be connected to a vehicle seat, such that the vehicle seat moves when the casing moves along the lead screw.

13. The apparatus of claim 4 or any one of claims 5 to 12 in combination with claim 4,
wherein the inner ring portion extends from the one end of the main body to the another end of the main body on an inner diameter surface of the main body.

14. The apparatus of claim 5 or any one of claims 6 to 13 in combination with claim 5,
wherein at least one portion of the lever extends in a direction parallel to an axial direction of the lead nut, such that an end of the at least one portion of the lever is disposed outside of the casing.

15. The apparatus of claim 7 or any one of claims 8 to 14 in combination with claim 7,
wherein the accommodation portion includes a groove defined opposite to the one end of the elastic member in a direction parallel to an axial direction of the lead nut.
